# EUROPÄISCHE PATENTSCHRIFT

(11) **EP 0 426 940 B1**
(45) Veröffentlichungstag und Bekanntmachung des Hinweises auf die Patenterteilung: **30.06.1993**
(21) Anmeldenummer: 90110219.4
(22) Anmeldetag: 30.05.1990
(51) Int. Cl.: F16F 13/00

(54) **Gummilager mit hydraulischer Dämpfung**
Rubber support with hydraulic damping
Support en caoutchouc à amortissement hydraulique

(30) Priorität: 09.11.1989 DE 3937232
(43) Veröffentlichungstag der Anmeldung: 15.05.1991
(73) Patentinhaber: Firma Carl Freudenberg, 69469 Weinheim (DE)
(72) Erfinder: Simuttis, Arnold, Dr., D-6550 Bad Kreuznach (DE)

(56) Entgegenhaltungen:
- EP-A- 0 154 828
- EP-A- 0 307 693
- EP-A- 0 307 741
- EP-A- 0 331 951
- EP-A- 0 354 381

## Beschreibung

Die Erfindung betrifft ein Gummilager nach dem Oberbegriff von Anspruch 1.

Ein solches Gummilager ist aus der EP-A- 0 307 741 bekannt. Das Motorlager umfaßt eine flüssigkeitsgefüllte Arbeitskammer und eine flüssigkeitsgefüllte Ausgleichskammer, die durch eine Zwischenplatte mit Überströmkanal flüssigkeitsleitend miteinander verbunden sind. Der Überströmkanal erstreckt sich im radial äußeren Bereich des Motorlagers und ist wendelförmig ausgeführt, um eine möglichst große Länge zu erreichen, so daß niederfrequente Schwingungen gut gedämpft werden können. Zur Isolierung akustisch störender Schwingungen ist innerhalb der Zwischenplatte eine zentrale Öffnung mit einer gummielastischen Entkopplungsmembran angeordnet, die mit einem randseitig umlaufenden Wulst zwischen der zweiteilig ausgeführten Trennwand angeklemmt ist. Als Wegbegrenzung sind einstückig mit der oberen und unteren Hälfte der Trennwand ausgebildete Stege vorgesehen, die gleichmäßig in Umfangsrichtung verteilt sind und einen verstärkten Ringbereich der Entkopplungsmembran nur teilweise umgreifen. Die Gebrauchseigenschaften einer derartigen Wegbegrenzung sind während einer langen Gebrauchsdauer wenig befriedigend, da auf die Entkopplungsmembran unterschiedlich große mechanische Belastungen wirken.

Außerdem ist zu beachten, daß die Membran, die zwischen der Arbeitskammer und der Ausgleichskammer angeordnet ist, im Bereich ihrer Einspannstellen im wesentlichen gleichförmig ausgebildet ist, wodurch ihre mechanische Widerstandsfähigkeit infolge verformungsbedingter Überlastungen eingeschränkt wird.

Aus der EP-A- 0 307 693 ist ein hydraulisch dämpfendes Zweikammermotorlager bekannt, in dessen Zwischenplatte eine beidseitig von Flüssigkeit beaufschlagte und parallel zur Richtung eingeleiteter Schwingungen bewegliche Membranplatte aus gummielastischem Material eingespannt ist. Die Membran soll eine gute Beweglichkeit zur Isolierung akustisch störender Schwingungen aufweisen, ohne daß beim Anschlagen der Membran an wegbegrenzende Anschläge ein Klappergeräusch entsteht. Dazu ist es vorgesehen, daß die Membranplatte an ihrem Außenumfang eine Vielzahl von Noppen aufweist, die einen zentralen Bereich mit in radialer Richtung angeordneten Schlitzen umschließen. Die aufklappbaren Kreissegmente bilden eine Bypassöffnung, die parallel zum eigentlichen Überströmkanal liegen. Sie klappen beim Beaufschlagen mit hohen Drücken auf, um eine hohe mechanische Beanspruchung der Membranplatte zu verhindern. Die Gebrauchsdauer dieses Lagers ist durch die vergleichsweise geringe Dicke des horizontalen Steges, der den zylindrischen Randbereich mit der eigentlichen Membran verbindet, wenig befriedigend.

Ein weiteres Gummilager ist aus der DE-PS 35 22 482 bekannt. Es gelangt bevorzugt zur Lagerung von Kolbenmotoren in Kraftfahrzeug zur Anwendung und zeichnet sich im neuwertigen Zustand durch gute Gebrauchseigenschaften aus. Die Gebrauchseigenschaften können jedoch bei langer Benutzungsdauer eine gewisse Beeinträchtigung erfahren.

Eine dem vorstehend beschriebenen Gummilager ähnliche Ausführung ist aus der DE-OS 27 27 244 bekannt. Für die Isolierung motorerregter, hochfrequenter Schwingungen ist dabei eine zwischen dem Arbeits- und dem Ausgleichsraum zwischen Anschlaggittern hin- und herbewegliche Trennwand vorgesehen. Die Trennwand gelangt bei Einleitung niederfrequenter Schwingungen von großer Amplitude, die sich beispielsweise beim Überfahren von Fahrbahnunebenheiten ergeben, in einen abwechselnden Berührungskontakt mit den Anschlaggittern, was deutlich hörbar in Erscheinung tritt. Auch bei dieser Ausführung können sich bei längerer Benutzungsdauer Beeinträchtigungen der Gebrauchseigenschaften ergeben.

Der Erfindung liegt die Aufgabe zugrunde, ein Gummilager zu entwickeln, das unter Vermeidung von Eigengeräuschen über lange Zeiträume nahezu unveränderte Gebrauchseigenschaften aufweist und eine gute Isolierung motorerregter, hochfrequenter Schwingungen ermöglicht sowie eine gute Dämpfung gleichzeitig eingeleiteter, fahrbahnerregter Schwingungen einer großen Amplitude.

Diese Aufgabe wird erfindungsgemäß bei einem Gummilager der eingangs genannten Art mit den den kennzeichnenden Merkmalen von Anspruch 1 gelöst. Auf vorteilhafte Ausgestaltungen nehmen die Unteransprüche Bezug.

Bei dem erfindungsgemäßen Gummilager ist es vorgesehen, daß der Stützkörper im Bereich der Verdickung kreisförmig gestaltet und unter Vermeidung einer nennenswerten Überdickung der Trennwand festgelegt ist und daß die Verdickung und der kreisförmige Teil des Stützkörpers etwa mittig zwischen dem Wulst und der Mitte der Trennwand angeordnet sind. Daraus folgt, daß in Umfangsrichtung betrachtet eine gleichmäßige Abstützung der Verdickung und damit der Trennwand beim Auftreten von Extremdrücken in dem Arbeits- oder dem Ausgleichsraum bedingt ist. Die Anordnung der Verdickung und des kreisförmigen Teils des Stützkörpers, etwa mittig zwischen dem Wulst und der Mitte der Trennwand, ist sowohl im Hinblick auf die sich während der bestimmungsgemäßen Verwendung in dem Arbeits- und dem Ausgleichsraum ergebenden hydrodynamischen Vorgänge als auch im Hinblick auf die Dauerhaltbarkeit der Trennwand von Vorteil.

Die aus Gummi bestehende Trennwand erfährt durch die kreisringförmig gestaltete Verdickung eine wesentliche Verbesserung ihrer mechanischen Widerstandsfähigkeit, wobei die von dem Wulst in Richtung der Verdickung zunehmende Verdickung, die in allen Umfangsbereichen übereinstimmend gestaltet ist, ein ausgeglichenes Verformungsverhalten bedingt. Verformungsbedingte Überlastungen der Trennwand werden hierdurch in allen Teilbereichen vermieden, was die Erzielung einer guten Dauerhaltbarkeit begünstigt.

Durch die in Richtung der Verdickung zunehmende Dicke der Trennwand setzt diese einer elastischen Verformung in Richtung des Arbeits- und des Ausgleichsraumes einen zunehmenden Widerstand entgegen, was mit zunehmender Größe der Auslenkbewegung eine zunehmende Verlangsamung des Bewegungsgeschwindigkeit bedingt. Die sich beim Auftreten von Auslenkbewegungen extremer Größe ergebende Berührung des Stützkörpers kann hierdurch im wesentlichen geräuschlos aufgefangen werden. Der Stützkörper ist in bezug auf das Traglager unnachgiebig festgelegt. Er vermag hierdurch noch weitergehende Deformierungen der Trennwand zu verhindern, was die Überdehnung ausschließt.

Der Stützkörper ist so gestaltet, daß eine nennenswerte Überdeckung der Trennwand vermieden wird. Die jeweils in dem Arbeits- und in dem Ausgleichsraum herrschenen Drücke vermögen sich dadurch nahezu unvermindert auf die Trennwand auszuwirken. Druckänderungen, die durch die Einleitung akustisch wirksamer, hochfrequenter Schwingungen verursacht sind, werden dementsprechend durch eine Relativverlagerung der Trennwand in ausgezeichneter Weise kompensiert, während die Trennwand niederfrequenten Schwingungen, die durch das Überfahren von Fahrbahnunebenheiten verursacht sind, den Widerstand entgegensetzt, der für die Erzielung einer guten Dämpfungswirkung in einer den Arbeits- und den Ausgleichsraum verbindenden Dämpfungsöffnung erforderlich ist.

Extremdrücke, die als Folge des Anlaßschüttelns eines Verbrennungsmotors oder beim Überfahren von Bordsteinkanten in dem Arbeits- oder dem Ausgleichsraum auftreten können, werden durch die Ventilfunktion der Durchtrennung aufgefangen. Diese ist unter Vermeidung einer Werkstoffentnahme erzeugt und kann aus einem geradlinig geführten Schnitt bestehen. Entsprechende Überdrücke führen zu einer vorübergehenden Aufblähung der an die Durchtrennung beiderseits angrenzenden Bestandteile der Trennwand, was einen schnellen Druckabbau bedingt und eine Übertragung der die Überdrücke verursachenden Relativverlagerungen des Verbrennungsmotors auf die Karosserie verhindert. Die Durchtrennung beginnt und endet im Bereich der Verdickung, was ein Weiterreißen und eine hierdurch verursachte Aufweitung weitestgehend ausschließt. Die Gebrauchseigenschaften sind dementsprechend über lange Zeiträume nahezu völlig unveränderlich.

Im Bereich des Wulstes und/oder der Verdickung kann ein gegebenenfalls voneinander abweichendes, axiales Spiel vorgesehen sein. Die axiale Relativbeweglichkeit der Trennwand in den radial innen- und außenseitig an die Verdickung anschließendenTeilbereichen kann dadurch voneinander verschieden gestaltet sein. Für die Isolierung hochfrequenter Schwingungen ist das von großem Vorteil.

Im Bereich der Verdickung kann wenigstens ein in Richtung des Stützkörpers vorspringender, einstöckig mit der Trennwand ausgebildeter Verformungskörper geringen Querschnittes vorgesehen sein. Dieser kann mit seinem vorstehenden Ende den Stützkörper bereits im nichtdeformierten Zustand der Trennwand an liegend berühren, was eine noch weitergehende Unterdrückung von Anschlaggeräuschen bedingt.

Ein solcher Verformungskörper kann ringförmig gestaltet sein, wobei sich im Hinblick auf die Gewährleistung einer guten Relativbeweglichkeit der Trennwand als vorteilhaft bewährt hat, wenn der Verformungskörper in gleichmäßig verteilten Umfangsabständen von Ausnehmungen unterbrochen ist. Er kann in den Zwischenzonen der Ausnehmungen noppenähnlich und beispielsweise kalottenförmig oder kegelig ausgebildet sein.

Eine noch bessere Verformbarkeit des Verformungskörpers läßt sich erreichen, wenn dieser der Ebene, in der sich die Trennwand erstreckt, in spitzwinklig geneigter Weise zugeordnet ist. Der progressive Verformungswiderstand, den die Trennwand einer axialen Ausweichbewegung entgegensetzt, läßt sich hierdurch bei leichter Relativbeweglichkeit in der Anfangsphase ganz bedeutend steigern.

Die Trennwand kann in dem Zwischenraum zwischen beiderseits vorgelagerten Stützkörpern angeordnet sein, an die sie abwechselnd ablegbar ist. Sie ist hierdurch in beiden Richtungen vor übergroßen Deformierungen geschützt.

Im allgemeinen hat sich als vorteilhaft bewährt, wenn die Trennwand, von dem Wulst ausgehend, in Richtung der Verdickung eine im wesentlichen gleichmäßig zunehmende Dicke hat. Die Erzielung eines gleichmäßigen Verformungsverhaltens in dem angegebenen Bereich wird hierdurch begünstigt, wobei es sich als vorteilhaft bewährt hat, wenn die Trennwand eine Dicke hat, die im Bereich des Wulstes so gering wie möglich ausgelegt ist und im Bereich der Verdickung mit deren Dicke im wesentlichen übereinstimmt. Radial innerhalb des Wulstes treten unter normalen Betriebsbedingungen keine elastischen Deformierungen der Trennwand auf. In diesem Bereich ist die Durchtrennung angeordnet, welche im Sinne der vorstehenden Ausführungen dem Abbau von Überdrücken dient.

Der Gegenstand der Erfindung wird nachfolgend anhand der als Anlage beigefügten Zeichnung weiter erläutert. Es zeigen:
- Fig. 1: ein Gummilager in längsgeschnittener Darstellung;
- Fig. 2 bis 4: trennwändeähnlich der in Fig. 1 zur Anwendung gelangenden Art in der Draufsicht und in halbgeschnittener Darstellung;
- Fig. 5: einen Stützkörper ähnlich der in Fig. 1 zur Anwendung gelangenden Art in der Draufsicht.

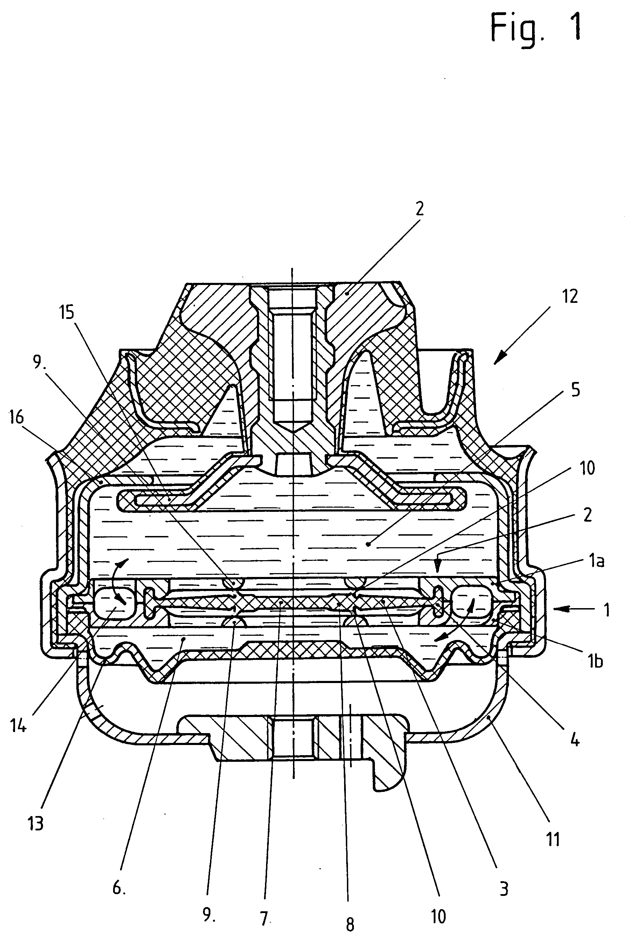

Das in Fig. 1 gezeigte Gummilager mit hydraulischer Dämpfung umfaßt ein Traglager 1, das unterseits mit einem tassenförmig ausgebildeten Bodenteil 11 verbunden ist und oberseits mit einem hohlkegeligen Federelement 12, welches seinerseits der Abstützung eines Auflagers 2 dient.

Das Traglager 1 weist eine radial nach innen geöffnete, umlaufende Nut auf, in der ein durch zwei aufeinander aufliegende Platten 1a, 1b gebildeter Stützkörper 9 sowie ein Balg 13 flüssigkeitsdicht aufgenommen ist. Die Platten 1a, 1 b sind gemeinsam von einer wendelförmig verlaufenden Dämpfungsöffnung 14 durchdrungen,welche den Arbeitsraum 5 und den Ausgleichsraum 6 untereinander verbindet. Sie umschließen des weiteren gemeinsam eine Nut 2, in der die Trennwand 3 mit einem Wulst angepaßten Profils aufgenommen ist. Die Trennwand 3 weist in einem radialen Abstand von dem sie randseitig umschließenden Wulst 4 eine kreisringförmig gestaltete Verdickung 8 auf und in der Zwischenzone eine Dicke, die im Bereich des Wulstes 4 so gering wie möglich gehalten ist und die im Bereich der Verdickung 8 den Wert von deren Dicke aufweist. Radial innerhalb der kreisringförmig gestalteten Verdickung 8 weist die Trennwand 3 wiederum die Dicke auf, die sie im wesentlichen im Bereich des Wulstes 4 hat. Ihre dem Arbeitsraum 5 und dem Ausgleichsraum 6 zugewandten Oberflächen erstrecken sich im wesentlichen parallel zueinander, und die Trennwand 3 ist in diesem Bereich von einer Durchtrennung 7 senkrecht zu ihrer Erstreckung durchschnitten.

Die Trennwand 3 besteht einstückig aus Gummi und ist im Bereich der Verdickung 8 mit beiderseits vorspringenden Verformungskörpern 10 versehen, die den in diesem Bereich kreisringförmig gestalteten Stützkörper 9 bereits im nicht-deformierten Zustand der Trennwand 3 lose anliegend berühren. Die Verformungskörper 10 haben einen besonders geringen Querschnitt und ein dreieckig begrenztes Profil, welches mit der Ebene der Trennwand einen spitzen Winkel einschließt. Sie sind noppenähnlich gestaltet und gleichmäßig in Umfangsrichtung verteilt. Einer anfänglichen Ausweichbewegung der Trennwand 3 bei einer sich betriebsbedingt ergebenden Druckänderung in dem Arbeitsraum 5 oder in dem Ausgleichsraum 6 setzen die Verformungskörper nur einen geringen Widerstand entgegen, der jedoch mit zunehmender Größe des Verformungsweges in progressiver Weise ansteigt. Hierdurch wird der notwendige Druckaufbau in dem Arbeitsraum 5 bzw. in dem Ausgleichsraum 6 gewährleistet, der erforderlich ist, um eine Hindurchpressung von Flüssigkeitsbestandteilen durch die Dämpfungsöffnung 14 und der Erzielung einer Dämpfungswirkung zu ermöglichen. Der Arbeitsraum 5, der Ausgleichsraum 6 und die Dämpfungsöffnung 14 sind während der bestimmungsgemäßen Verwendung vollständig mit einer hydraulischen Flüssigkeit gefüllt.

Das in Fig. 1 gezeigte Gummilager ist in entlastetem Zustand gezeigt, d.h. noch vor dem Aufbringen der bestimmungsgemäß zu tragenden, statischen Last. Hierdurch ergibt sich eine gegenseitige Berührung zwischen der Anschlagplatte 15 und dem Gegenanschlag 16. Beide weisen nach dem Aufbringen der bestimmungsgemäß zu tragenden, statischen Last einen axialen Abstand voneinander auf, der etwa ebenso groß ist wie der Abstand der Anschlagplatte 15 von der Oberseite des Stützkörpers 9. Der Bewegungsspielraum des Auflagers 2 in bezug auf das Traglager 1 ist hierdurch in beiden Richtungen im wesentlichen ausgeglichen.

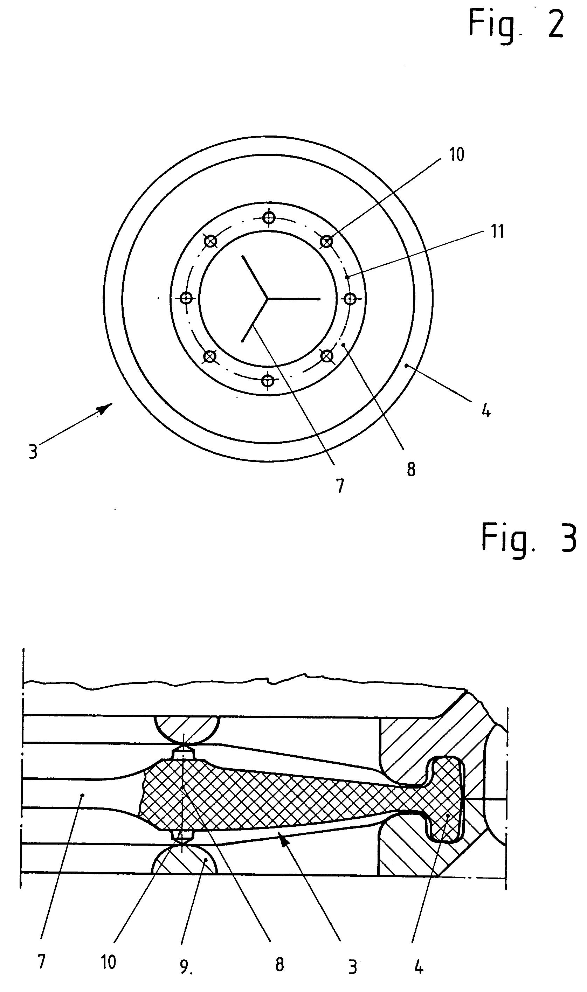

In Fig. 2 ist die in Fig. 1 zur Anwendung gelangende Trennwand 3 in der Draufsicht wiedergegeben. Die noppenförmige Gestalt der Verformungskörper 10 wird hierdurch sichtbar sowie deren gegenseitige Zuordnung in gleich großen Umfangsabständen. Die Durchtrennung 7 umfaßt drei Einschnitte, welche einander unter einem Winkel von 120° zugeordnet sind und mittig ineinander übergehen.

In Fig. 3 ist der Einspannungsbereich einer anderen beispielhaften Ausführung einer Trennwand wiedergegeben. Es ist zu ersehen, daß die Verformungskörper bereits im unverformten Zustand der Trennwand 3 den Stützkörper 9 mit kegelig vorstehenden Spitzen anliegend berühren. Darüber hinaus weist die Trennwand 3 in der Zwischenzone zwischen dem Wulst 4 und der Verdickung 8 eine gleichmäßig in Richtung der Verdickung 8 zunehmende Dicke auf. Die Durchtrennung ist mit 7 bezeichnet.

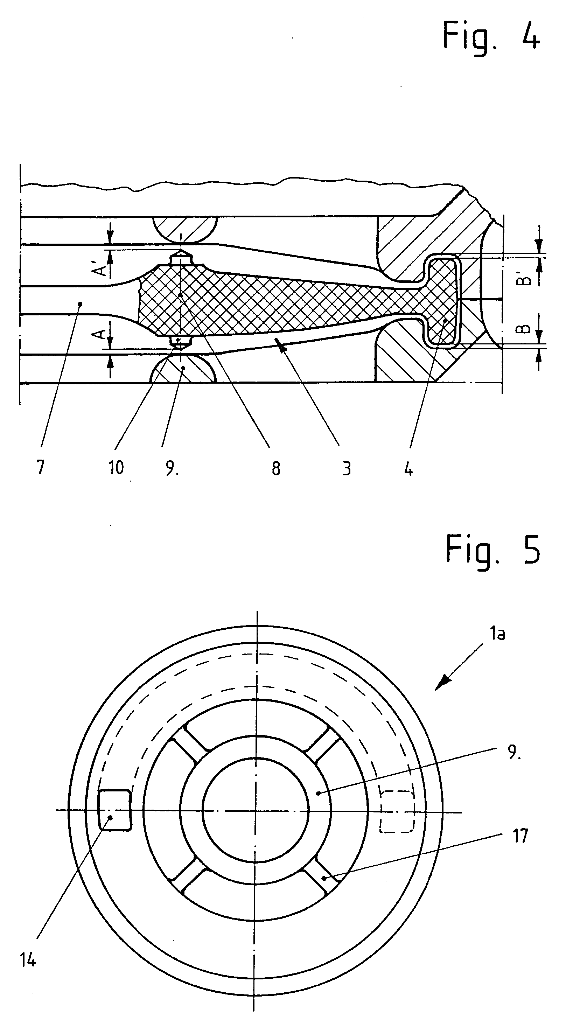

Fig. 4 nimmt Bezug auf eine ähnliche Einbausituation wie vorstehend beschrieben. Die Trennwand 3 ist bei dieser Ausführung indessen so gestaltet, daß sich während der bestimmungsgemäßen Verwendung im Bereich der Verformungskörper 10 ein Spiel A, A' ergibt und im Bereich des Wulstes 4 ein Spiel B, B'. Das Spiel kann in den beiden Bereichen eine voneinander abweichende Größe haben.

Fig. 5 zeigt die Platte 1a der Ausführung des Gummilagers nach Fig. 1 in einer Ansicht von oben. Hierdurch wird die kreisringförmige Gestaltung des Stützkörpers 9 verdeutlicht sowie die Festlegung des Stützkörpers 9 an dem äußeren Teil der Platte a durch in radialer Richtung verlaufende Speichen 17 von geringer Ausdehnung. Die Zwischenräume sind entsprechend groß, was eine Zugänglichkeit der nicht gezeigten Trennwand durch die sie sich während der bestimmungsgemäßen Verwendung in dem Arbeitsraum ergebenden Druckänderungen bedingt. Die Dämpfungsöffnung ist mit 14 bezeichnet. Sie hat den durch gestrichelte Linien angedeuteten Verlauf.

## Patentansprüche

1. Gummilager mit hydraulischer Dämpfung, umfassend ein Traglager (1) mit einer umlaufenden Nut (2), bei dem in der Nut (2) eine einstückig ausgebildete, elastisch verformbare Trennwand (3) mit einem randseitig umlaufenden Wulst (4) aufgenommen ist und bei dem die Trennwand (3) einen Arbeits- (5) und einen Ausgleichsraum (6) voneinander trennt und radial innerhalb der Wulstes (4) in einem ersten Teilbereich mit wenigstens einer Verdickung (8) und in einem zweiten Teilbereich mit wenigstens einer Durchtrennung (7) versehen ist, wobei die Verdickung (8) ringförmig gestaltet ist und sich in einem radialen Abstand von dem Wulst (4) parallel zu diesem erstreckt, wobei die Trennwand (3), von dem Wulst (4) ausgehend eine in Richtung der Verdickung (8) zunehmende Dicke hat und wobei die Trennwand (3) mit der Verdickung (8) wenigstens einseitig an einen Stützkörper (9) des Traglagers (1) anlegbar ist, dadurch gekennzeichnet, daß der Stützkörper (9) im Bereich der Verdickung (8) kreisförmig gestaltet und unter Vermeidung einer nennenswerten Überdickung der Trennwand (3) festgelegt ist und daß die Verdickung (8) und der kreisförmige Teil des Stützkörpers (9) etwa mittig zwischen dem Wulst (4) und der Mitte der Trennwand (3) angeordnet sind.

2. Gummilager nach Anspruch 1, dadurch gekennzeichnet, daß der Wulst (4) mit axialem Spiel in der Nut (2) aufgenommen ist.

3. Gummilager nach Anspruch 1 bis 2, dadurch gekennzeichnet, daß zwischen der Verdickung (8) und dem Stützkörper (9) ein axiales Spiel vorgesehen ist.

4. Gummilager nach Anspruch 2 und 3, dadurch gekennzeichnet, daß das Spiel im Bereich des Wulstes (4) abweichend gestaltet ist von dem Spiel im Bereich der Verdickung (8).

5. Gummilager nach Anspruch 1 bis 4, dadurch gekennzeichnet, daß im Bereich der Verdickung (8) wenigstens ein in Richtung des Stützkörpers (9) vorspringender, einstückig mit der Trennwand (3) ausgebildeter Verformungskörper (10) geringen Querschnittes vorgesehen ist.

6. Gummilager nach Anspruch 1 bis 5, dadurch gekennzeichnet, daß die Trennwand (3) mit der Verdickung (8) beiderseits an Stützkörper (9) des Traglagers (1) anlegbar ist.

7. Gummilager nach Anspruch 1 bis 6, dadurch gekennzeichnet, daß die Trennwand (3), von dem Wulst (4) ausgehend, in Richtung der Verdickung (8) eine im wesentlichen gleichmäßig zunehmende Dicke hat.

8. Gummilager nach Anspruch 7, dadurch gekennzeichnet, daß die Trennwand (3) eine Dicke hat, die im Bereich des Wulstes (8) so gering wie möglich ausgelegt ist und die im Bereich der Verdickung (8) mit deren Dicke im wesentlichen übereinstimmt.

## Claims

1. A rubber support with hydraulic damping, comprising a bearing support (1) with an encircling groove (2), in which an elastically deformable partition wall (3) of one-piece design is held in the groove by means of a bead (4) running round at the rim and in which the partition wall (3) separates a working space (5) and a compensating space (6) from one another and, radially to the inside of the bead (4), is provided in a first subregion with at least one thickened portion (8) and in a second subregion with at least one through-cut (7), the thickened portion (8) being of annular configuration and extending at a radial distance from the bead (4), parallel to the latter, the partition wall (3) having a thickness which increases in the direction of the thickened portion (8) starting from the bead (4), and the partition wall (3) being capable of being brought to rest on at least one side, by the thickened portion (8), against a supporting element (9) of the bearing support (1), characterised in that, in the region of the thickened portion (8), the supporting element (9) is of circular configuration and is fixed while avoiding a significant overthickening of the partition wall (3) and in that the thickened portion (8) and the circular part of the supporting element (9) are arranged approximately centrally between the bead (4) and the centre of the partition wall (3).

2. A rubber support according to claim 1, characterised in that the bead (4) is held with axial clearance in the groove (2).

3. A rubber support according to either of claims 1 and 2, characterised in that an axial clearance is provided between the thickened portion (8) and the supporting element (9).

4. A rubber support according to claims 2 and 3, characterised in that the clearance in the region of the bead (4) is different from the clearance in the region of the thickened portion (8).

5. A rubber support according to any of claims 1 to 4, characterised in that at least one deformation element (10) of small cross-section projecting in the direction of the supporting element (9) and formed integrally with the partition wall (3) is provided in the region of the thickened portion (8).

6. A rubber support according to any of claims 1 to 5, characterised in that the partition wall (3) can be brought to rest on both sides, by the thickened portion (8), against supporting elements (9) of the bearing support (1).

7. A rubber support according to any of claims 1 to 6, characterised in that the partition wall (3) has an essentially uniformly increasing thickness in the direction of the thickened portion (8), starting from the bead (4).

8. A rubber support according to claim 7, characterised in that the partition wall (3) has a thickness which is as small as possible in the region of the bead (8) and, in the region of the thickened portion (8), corresponds essentially to the thickness of the latter.

## Revendications

1. Support en caoutchouc avec amortissement hydraulique, comportant un organe de support (1) pourvu d'une rainure périphérique (2) dans laquelle est reçue une paroi séparatrice (3) réalisée d'une seule pièce, déformable élastiquement et comportant un bourrelet (4) entourant son bord, et dans lequel la paroi séparatrice (3) sépare une chambre de travail (5) et une chambre d'équilibrage (6) l'une de l'autre est pourvue, radialement vers l'intérieur du bourrelet (4), d'au moins une partie surépaissie (8) dans une première zone partielle et d'au moins une partie de sectionnement (7) dans une seconde zone partielle, la partie surépaissie (8) étant agencée avec une forme annulaire et s'étendant, en étant espacée radialement du bourrelet (4), parallèlement à celui-ci, la paroi séparatrice (3) ayant, à partir du bourrelet (4), une épaisseur qui augmente en direction de la partie surépaissie (8) et en outre la paroi séparatrice (3) pouvant être appliquée par la partie surépaissie (8) au moins d'un côté contre un corps d'appui (9) de l'organe de support (1), caractérisé en ce que le corps d'appui (9) est agencé avec une forme circulaire dans la zone de la partie surépaissie (8) et est fixé en évitant une augmentation sensible d'épaisseur de la paroi séparatrice (3), et en ce que la partie surépaissie (8) et la partie de forme circulaire du corps d'appui (9) sont disposées à peu près au milieu entre le bourrelet (4) et le centre de la paroi séparatrice (3).

2. Support en caoutchouc selon la revendication 1, caractérisé en ce que le bourrelet (4) est reçu avec un jeu axial dans la rainure (2).

3. Support en caoutchouc selon une des revendications 1 et 2, caractérisé en ce qu'il est prévu un jeu axial entre la partie surépaissie (8) et le corps d'appui (9).

4. Support en caoutchouc selon une des revendications 2 et 3, caractérisé en ce que le jeu existant dans la zone du bourrelet (4) est différent du jeu existant dans la zone de la partie surépaissie (8).

5. Support en caoutchouc selon une des revendications 1 à 4, caractérisé en ce qu'il est prévu dans la zone de la partie surépaissie (8) au moins un corps de déformation (10) de petite section, faisant saillie en direction du corps d'appui (9) et formé unitairement avec la paroi séparatrice (3).

6. Support en caoutchouc selon une des revendications 1 à 5, caractérisé en ce que la paroi séparatrice (3) peut être appliquée par la partie surépaissie (8) des deux côtés contre le corps d'appui (9) de l'organe de support (1).

7. Support en caoutchouc selon une des revendications 1 à 6, caractérisé en ce que la paroi séparatrice (3) a, à partir du bourrelet (4), une épaisseur augmentant de façon sensiblement uniforme en direction de la partie surépaissie (8).

8. Support en caoutchouc selon la revendication 7, caractérisé en ce que la paroi séparatrice (3) a une épaisseur qui est aussi petite que possible dans la zone du bourrelet (8) et qui correspond sensiblement, dans la zone de la partie surépaissie (8) à l'épaisseur de cette dernière.
